# EUROPÄISCHE PATENTSCHRIFT

(11) **EP 3 069 451 B1**
(45) Veröffentlichungstag und Bekanntmachung des Hinweises auf die Patenterteilung: **13.09.2017**
(21) Anmeldenummer: 15708784.2
(22) Anmeldetag: 27.02.2015
(51) Int. Cl.: H04B 3/54

(54) **DATENÜBERMITTLUNG ÜBER EINE STROMVERSORGUNGSLEITUNG**
DATA TRANSMISSION VIA A POWER SUPPLY LINE
TRANSFERT DE DONNÉES PAR L'INTERMÉDIAIRE D'UNE LIGNE D'ALIMENTATION ÉLECTRIQUE

(30) Priorität: 18.03.2014 DE 102014204965
(43) Veröffentlichungstag der Anmeldung: 21.09.2016
(73) Patentinhaber: Siemens Aktiengesellschaft, 80333 München (DE)
(72) Erfinder: KOCH, Georg, 85716 Unterschleißheim (DE); RUNGE, Robert, 82387 Antdorf (DE)
(86) Internationale Anmeldenummer: PCT/EP2015/054183
(87) Internationale Veröffentlichungsnummer: WO 2015/139936

(56) Entgegenhaltungen:
- WO-A1-01/54298
- WO-A1-99/46868
- US-A1- 2006 187 015
- US-A1- 2013 278 069

## Beschreibung

Die vorliegende Erfindung betrifft eine Technik zur Übermittlung von Daten. Insbesondere betrifft die Erfindung eine Datenübermittlung über eine Stromversorgungsleitung.

Beispielsweise in der Straßenverkehrstechnik oder der Bahntechnik ist ein elektrisches Gerät mittels einer Versorgungsleitung mit einer Versorgungseinrichtung verbunden. Die Versorgungseinrichtung stellt die elektrische Energie bereit, die das elektrische Gerät benötigt. Zwischen dem Gerät und der Versorgungseinrichtung kann eine Distanz im Bereich von bis zu ca. 500 m liegen.

Gelegentlich ist es erforderlich, Daten, die beispielsweise einen Betriebszustand des elektrischen Geräts betreffen, von dem Gerät zur Versorgungseinrichtung zu übermitteln.

EP 2 197 101 A2 betrifft eine Datenübermittlung zwischen einer Stromversorgung und einem Elektromotor.

DE 10 2008 041 030 A1 schlägt ein Verfahren zur Übermittlung von Daten über eine elektrische Versorgungsleitung eines Sensors vor.

DE 101 96 411 T5 betrifft ein weiteres Verfahren zur Datenübertragung mittels Strommodulation.

Die internationale Patentanmeldung WO 99/46868 A1 betrifft eine Datenübermittlung zwischen einem ersten und einem zweiten elektrischen Gerät, die mittels einer Zweidrahtleitung miteinander verbunden sind. Ein Gerät liefert elektrische Energie für das andere Gerät über die Zweidrahtleitung. Um binäre Daten zwischen den beiden Geräten zu übermitteln, ohne die Übertragung elektrischer Energie zu beeinträchtigen, kann eines der Geräte die zwischen den beiden Leitungen anliegende Spannung taktbasiert beeinflussen. Die Bitcodierung erfolgt zeitbasiert, das heißt, die zeitliche Dauer einer Beeinflussung des aufgenommenen Stroms ist für den Wert des Bits entscheidend, es findet im Wesentlichen eine Zeitcodierung statt. Es sind zwei Kanäle vorgesehen, die P-Kanal und N-Kanal genannt werden. Der P-Kanal entspricht einem Erhöhen des vom sendenden Gerät aufgenommenen Stroms von einem üblicherweise aufgenommenen Wert, der N-Kanal entspricht einem Verringern. Die beiden Kanäle beeinflussen sich nicht gegenseitig.

Die internationale Patentanmeldung WO 01/54298 A1 offenbart ein System zur Vollduplex-Übertragung zwischen zwei Geräten über eine Zweidrahtleitung. Dabei wird die Zweidrahtleitung gleichzeitig zur Übertragung elektrischer Energie zwischen dem ersten und dem zweiten Gerät verwendet. Damit das zweite Gerät eine digitale Information an das erste Gerät übermitteln kann, ändert es seine Impedanz, sodass sich der Stromfluss durch die Zweidrahtleitung ändert. Dazu wird der Widerstandswert eines Shunt, der mit der Zweidrahtleitung verbunden ist, vergrößert oder verkleinert. Auf diese Weise kann der aufgenommene Strom zwischen einem ersten Wert (üblicherweise aufgenommener Strom, Shunt mit großer Impedanz) und einem zweiten, erhöhten Wert (Shunt mit kleiner Impedanz) variiert werden.

Die Patentanmeldung US 2013/278069 A1 zeigt eine Technik zur Übertragung von elektrischer Energie und überlagerten digitalen Informationen. Zwei Geräte sind nach Art eines DC-DC-Wandlers mittels einer Zweidrahtleitung miteinander verbunden. Die Primärseite, die die elektrische Energie bereitstellt, und die Sekundärseite bilden zusammen einen verteilten Spannungsregler. Dazu werden erste Informationen von der Primärseite an die Sekundärseite mittels Variation der übermittelten Spannung und zweite Informationen von der Sekundärseite an die Primärseite mittels einer Photostrecke übermittelt, um eine Regelschleife zu schließen.

Sollen die Daten über die Versorgungsleitung übertragen werden, so kann die Übermittlung beispielsweise durch kapazitive Einkopplung von Störspannungen, Übersprechen von Nachbarleitungen oder anderen Einflüssen negativ beeinflusst werden. Es ist daher Aufgabe der vorliegenden Erfindung, eine Technik zur verbesserten Übertragung von Daten von dem Gerät zur Versorgungseinrichtung bereitzustellen. Die Erfindung löst diese Aufgabe mittels eines Geräts, einer Versorgungseinrichtung, eines Verfahrens und eines Computerprogrammprodukts mit den Merkmalen der beigefügten unabhängigen Ansprüche. Unteransprüche geben bevorzugte Ausführungsformen wieder.

Ein elektrisches Gerät umfasst einen Anschluss für eine elektrische Versorgungsleitung zu einer Versorgungseinrichtung, einen elektrischen Verbraucher zum Betrieb mittels Strom aus der elektrischen Versorgungsleitung, einen Encoder zur Bereitstellung einer Bitsequenz auf der Basis von Daten, die vom elektrischen Gerät an die Versorgungseinrichtung übermittelt werden sollen, und eine Stromsteuerung zur Beeinflussung eines über die elektrische Versorgungsleitung aufgenommenen elektrischen Stroms auf der Basis der Bitsequenz.

So kann auf einfache und robuste Weise eine Datenübertragung über die Versorgungsleitung zur Versorgungseinrichtung erfolgen. Durch entsprechende Wahl von Übertragungsgeschwindigkeit und Werten, auf die der Strom gesteuert wird, kann die Robustheit an vorliegende Anforderungen angepasst werden. Ein übliches elektrisches Gerät kann mit geringem Aufwand dazu ausgerüstet werden, die Daten über die Versorgungsleitung zu übermitteln. Die Versorgungsleitung selbst muss nicht verändert werden.

In einer ersten Variante ist die Stromsteuerung dazu eingerichtet, den durch das elektrische Gerät aufgenommenen Strom in Abhängigkeit des Werts eines Bits der Sequenz alternativ zu erhöhen oder gleich zu lassen. Das Erhöhen des aufgenommenen Stroms kann insbesondere leicht durch ein Einschalten eines zusätzlichen elektrischen Verbrauchers erfolgen. Je nach verwendeter Codierung und den zu übertragenden Daten kann der zusätzliche Stromverbrauch im Bereich von 50% der Übertragungszeit oder weniger auftreten. Die Codierung kann beispielsweise eine unipolare RZ ("Return To Zero")-Codierung umfassen. Die Stromaufnahme des elektrischen Verbrauchers kann dadurch unbeeinflusst sein.

In einer zweiten Variante ist die Stromversorgung dazu eingerichtet, den durch das elektrische Gerät aufgenommenen Strom in Abhängigkeit des Werts eines Bits der Sequenz alternativ auf einen ersten oder einen zweiten Wert zu ändern, wobei die Werte unterschiedlich groß sind und beide Werte oberhalb eines üblicherweise vom Verbraucher aufgenommenen Stroms liegen.

Dadurch kann sichergestellt sein, dass beide möglichen Werte des Bits durch jeweils einen vorbestimmten elektrischen Strom repräsentiert bzw. signalisiert sind. Eine Übertragungssicherheit kann dadurch verbessert sein. Alternativ kann eine Übertragungsgeschwindigkeit bei gleichbleibender Übertragungsqualität erhöht sein.

In einer dritten Variante ist die Stromsteuerung dazu eingerichtet, den durch das elektrische Gerät aufgenommenen Strom in Abhängigkeit eines Werts eines Bits der Sequenz alternativ auf einen ersten oder einen zweiten Wert zu ändern, wobei der eine Wert oberhalb eines üblicherweise vom Verbraucher aufgenommenen Stroms liegt und der andere darunter. In diesem Fall können die Daten beispielsweise mittels eines bipolaren RZ-Codes codiert werden.

Im zeitlichen Mittel kann dabei der durch das Gerät aufgenommene elektrische Strom trotz der Datenübertragung unverändert sein. Insbesondere wenn der elektrische Verbraucher einfach ist, beispielsweise eine elektrische Heizung oder eine elektrische Beleuchtung umfasst, können die durch die Datenübermittlung bedingten Stromschwankungen hingenommen werden. Eine Leistung des elektrischen Verbrauchers kann dadurch unbeeinflusst sein.

In einer weiteren Ausführungsform sind eine elektrische Speichereinrichtung zur Aufnahme der durch das elektrische Gerät aufgenommenen Energie und ein Stromrichter zur Versorgung des elektrischen Verbrauchers aus der Speichereinrichtung vorgesehen. Die Speichereinrichtung kann beispielsweise einen Kondensator umfassen. Der Kondensator speichert die bei erhöhtem Stromverbrauch zusätzlich aufgenommene elektrische Energie zwischen und gibt sie wieder ab, wenn die Stromaufnahme des elektrischen Geräts durch die Datenübermittlung verringert ist. Dadurch kann ein Verlust elektrischer Energie durch die Veränderung des durch das Gerät aufgenommenen Stroms verringert werden. Durch den Stromrichter kann auch ein empfindlicher Verbraucher, beispielsweise ein elektronischer Verbraucher, ungestört betrieben werden. Dadurch können auch komplexere Verbraucher, die beispielsweise einen elektronischen Schaltkreis oder einen programmierbaren Mikrocomputer umfassen, in dem Gerät betrieben werden. Die Verwendbarkeit des Geräts kann dadurch gesteigert sein und Kosten für das Gerät können gesenkt sein.

In noch einer weiteren Ausführungsform ist die Stromsteuerung dazu eingerichtet, die Stromaufnahme des elektrischen Geräts zusätzlich in Abhängigkeit eines Füllgrads der elektrischen Speichereinrichtung zu beeinflussen.

Dadurch kann auch bei Schwankungen in der Stromaufnahme des elektrischen Verbrauchers noch eine Signalisierung über die Versorgungsleitung mittels des geänderten Stromverbrauchs sicher gestellt sein. Der Betrieb des elektrischen Verbrauchers und die Übertragung von Daten können so noch besser voneinander separiert werden. Durch die Beeinflussung des aufgenommenen Stroms in Abhängigkeit zweier Parameter kann eine verbesserte robuste und nebenwirkungsfreie Datenübertragung erzielt werden.

Allen beschriebenen Varianten ist gemeinsam, dass der Encoder bevorzugterweise dazu eingerichtet ist, eine Bitsequenz auf der Basis von Betriebsdaten des elektrischen Verbrauchers bereitzustellen. Die Betriebsdaten können beispielsweise einen Verbrauchswert, eine Selbstdiagnose oder Abrechnungsdaten umfassen. In einer Ausführungsform werden die zu übertragenden Daten durch den Encoder auch codiert, beispielsweise bezüglich besserer Übertragbarkeit, besserer Übertragungssicherheit oder verbessertem Datenschutz. Insbesondere kann seitens der Versorgungseinrichtung ein Arbeitszustand des Geräts auf einfache und zuverlässige Weise erfasst werden.

Es ist weiter bevorzugt, dass die Übertragungsrate der Bitsequenz höher als eine übliche Änderungsfrequenz der Stromaufnahme des Verbrauchers ist. Änderungen in der Stromaufnahme des Geräts, die von Aufnahmeschwankungen des Verbrauchers herrühren, können dann auf einfache Weise beispielsweise mittels eines Hochpasses ausgefiltert werden.

Weiter kann vorteilhafterweise die Codierung der Daten so erfolgen, dass die aufsummierte Ladungsmenge für jedes zu übertragende Bit konstant bleibt, unabhängig von dessen Wert. Dies kann beispielsweise mit Hilfe des Manchester Codes oder eines anderen geeigneten Codierungsverfahrens realisiert werden.

Eine elektrische Versorgungseinrichtung umfasst eine elektrische Energiequelle, einen Anschluss für eine elektrische Versorgungsleitung zu einem elektrischen Gerät, eine Einrichtung zur Bestimmung eines durch das elektrische Gerät aufgenommenen Stroms und einen Decoder zur Bereitstellung von Daten auf der Basis einer Sequenz bestimmter elektrischer Stromaufnahmen.

Die elektrische Versorgungseinrichtung kann insbesondere vorteilhaft in Zusammenhang mit dem oben beschriebenen Gerät eingesetzt werden. Eine bekannte elektrische Versorgungseinrichtung muss nur wenig verändert werden, um Daten, die dem Stromverbrauch des Geräts aufgeprägt sind, zu decodieren. Eine bekannte Versorgungseinrichtung kann so kostengünstig zum Empfangen von über die Versorgungsleitung übermittelte Daten ausgerüstet werden.

In einer bevorzugten Ausführungsform ist ein Hochpass zur Unterdrückung von datenfremden Änderungen des bestimmten Stroms vorgesehen. Stromschwankungen, die auf der Basis eines elektrischen Verbrauchers des angeschlossenen Geräts üblich sein können, können so von der Rekonstruktion bzw. Verarbeitung der empfangenen Daten ferngehalten werden.

Ein Verfahren zum Übermitteln von Daten von einem elektrischen Gerät, das mit einer elektrischen Versorgungseinrichtung verbunden ist, zu der Versorgungseinrichtung umfasst Schritte des Bereitstellens einer Bitsequenz auf der Basis der zu übermittelnden Daten, des Beeinflussens, durch das Gerät, eines durch das elektrische Gerät aufgenommenen Stroms auf der Basis der Bitsequenz, des Bestimmens, durch die Versorgungseinrichtung, eines durch das elektrische Gerät aufgenommenen Stroms und des Bereitstellens der Daten auf der Basis einer Sequenz bestimmter elektrischer Stromaufnahmen.

Das Verfahren kann es ermöglichen, auf einfache und kostengünstige Weise Daten vom Gerät zur Versorgungseinrichtung zu übermitteln. Die übermittelten Distanzen können im Bereich von mehreren hundert Metern bis zu mehreren Kilometern liegen, sodass sich das Verfahren insbesondere für eine Weitverkehrstechnik wie den Straßenverkehr oder die Bahntechnik eignen kann.

Ein Computerprogrammprodukt umfasst Programmcodemittel zur Durchführung des beschriebenen Verfahrens, wenn das Computerprogrammprodukt auf einer Ausführungseinrichtung abläuft oder auf einem computerlesbaren Medium gespeichert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: ein Energieversorgungssystem;
- FIG 2: eine weitere Ausführungsform des Energieversorgungssystems von FIG 1;
- FIG 3: ein elektrisches Gerät für das Energieversorgungssystem von Fign. 1 oder 2 in einer weiteren Ausführungsform und
- FIG 4: eine Versorgungseinrichtung für das Energieversorgungssystem von Fign. 1 oder 2 in einer weiteren Ausführungsform darstellt.

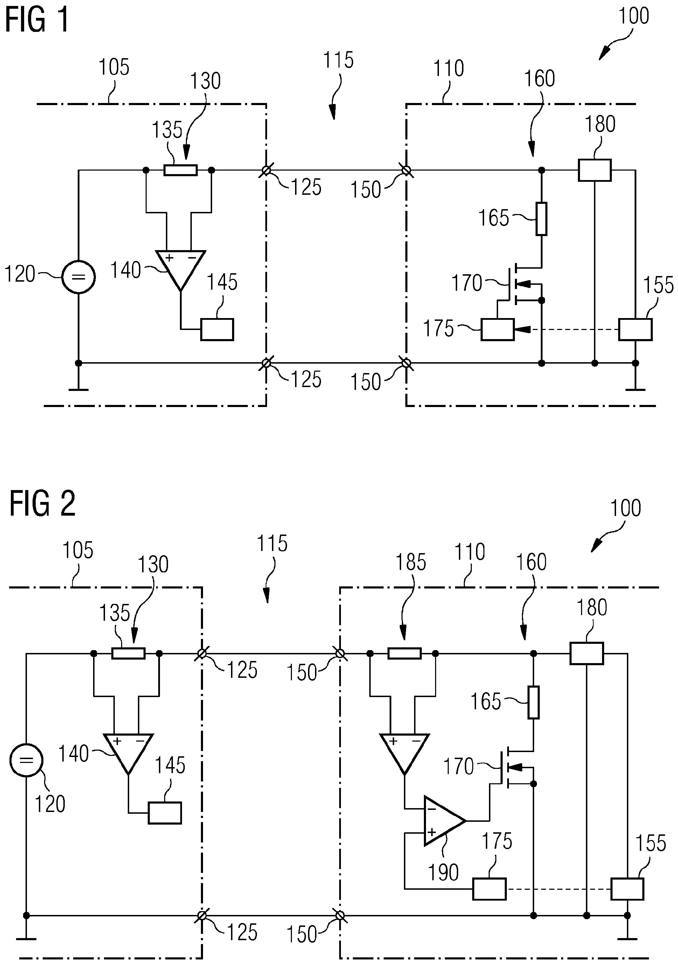

FIG 1 zeigt ein Energieversorgungssystem 100. Das System 100 umfasst eine Versorgungseinrichtung 105 und ein elektrisches Gerät 110, die mittels einer elektrischen Versorgungsleitung 115 miteinander verbunden sind. Die Versorgungsleitung 115 kann eine Länge von mehreren hundert Metern oder mehreren Kilometern erreichen. Beispielsweise können die Versorgungseinrichtung 105 und das Gerät 110 bis zu ca. 500 m voneinander entfernt sein. Das System 100 kann insbesondere in der Straßenverkehrstechnik oder der Bahntechnik eingesetzt sein.

Die Versorgungseinrichtung 105 umfasst eine elektrische Energiequelle 120, die an einen Anschluss 125 geführt ist, der mit der Versorgungsleitung 115 verbunden ist. Die Energiequelle 120 kann eine Gleich- oder Wechselspannung bereitstellen. In einer Ausführungsform kann die Energiequelle 120 auch durch einen Anschluss gebildet sein, der mittels einer weiteren Versorgungsleitung mit einer anderen Energiequelle verbunden ist. Ferner ist eine Einrichtung 130 zur Bestimmung eines elektrischen Stroms bereitgestellt, der durch die elektrische Versorgungsleitung 115 bzw. das elektrische Gerät 110 fließt. In der dargestellten Ausführungsform umfasst die Einrichtung 120 einen Längswiderstand 135 ("Shunt") und einen Differenzverstärker 140 zur Verstärkung der über dem Längswiderstand 135 abfallenden Spannung.

In einer anderen Ausführungsform wird der durch die Versorgungsleitung 115 fließende Strom statt mittels des Längswiderstands 135 mittels eines Magnetfeldsensors bestimmt, der ein vom Strom abhängiges Magnetfeld bestimmt, das im Bereich der Versorgungsleitung 135 besteht. Auch auf diese Weise kann eine elektronische Schaltung zur Auswertung des von der Stromstärke abhängigen Signals galvanisch von dem übertragenen Strom getrennt sein. Die elektromagnetische Störempfindlichkeit der Schaltung kann dadurch verbessert sein.

Eine zeitliche Abfolge oder Sequenz von mittels der Einrichtung 130 bestimmten Stromaufnahmen kann mittels eines Decoders 145 in Daten umgewandelt werden. Die Daten liegen dann in üblicher, digitaler Form vor und können auf beliebige Weise weiterverarbeitet werden. Übliche Aufgaben wie eine Synchronisierung, eine Entschlüsselung, eine Rekonstruktion partitionierter Daten, eine Fehlererkennung oder eine Fehlerbehebung können auf eine beliebige bekannte Art und Weise erfolgen.

Das Gerät 110 ist dazu eingerichtet, einerseits über die elektrische Versorgungsleitung 125 mit elektrischer Energie von der Versorgungseinrichtung 105 versorgt zu werden und andererseits Daten an die Versorgungseinrichtung 105 zu übermitteln. Dabei erfolgt die Übermittlung mittels Variation des durch das Gerät 110 aufgenommenen Stroms.

Das Gerät 110 umfasst einen Anschluss 150 zur Verbindung mit der Versorgungsleitung 115, einen elektrischen Verbraucher 155 zum Betrieb mittels Strom aus der elektrischen Versorgungsleitung 115 und eine Stromsteuerung 160 zur Beeinflussung des über die Versorgungsleitung 115 aufgenommenen elektrischen Stroms. Die Stromsteuerung 160 umfasst in der dargestellten Ausführungsform einen weiteren Verbraucher 165 und eine Schalteinrichtung 170, um den weiteren Verbraucher 165 mit dem Anschluss 150 zu verbinden, sodass er von Strom der Versorgungsleitung 115 durchflossen wird. Die Schalteinrichtung 170 kann beispielsweise durch einen Transistor, etwa einen FET, IGBT oder Bipolar-Transistor, oder ein anderes Schaltelement realisiert sein. Der weitere Verbraucher 165 ist im einfachsten Fall ein Widerstand zur Umwandlung von elektrischem Strom in Wärme.

Daten, die vom Gerät 110 zur Versorgungseinrichtung 105 übertragen werden sollen, können insbesondere Betriebsdaten des elektrischen Verbrauchers 155 umfassen. Ungeachtet der Quelle der Daten ist ein Encoder 175 dazu vorgesehen, die Daten in eine Bitsequenz umzuwandeln, wobei die Stromsteuerung 160 in Abhängigkeit des Werts eines Bits der Sequenz gesteuert wird. Dabei kann der Encoder 175 beliebige, bekannte Codierweisen anwenden, beispielsweise zur Erzeugung von Gleichspannungsfreiheit (etwa mit einer Manchaster-Codierung), zur Absicherung der Daten mittels Prüfsumme etc. Im Einfachsten Fall kann der Encoder 175 durch ein getaktetes Schieberegister gebildet sein. Sind die zu übermittelnden Daten analoger Natur, so kann zusätzlich ein Analog-Digital-Wandler vorgesehen sein.

Optional kann ein Stromrichter 180 vorgesehen sein, um dem Verbraucher 155 einen konstanten Strom oder eine konstante Spannung bereitzustellen.

In einer Ausführungsform bleibt der durch den Verbraucher 155 aufgenommene Strom durch die Stromsteuerung 160 unbeeinflusst, wenn der Wert des aktuell zu übermittelnden Bits 0 ist. Ist der Wert des Bits 1, so wird der durch das Gerät 110 aufgenommene Strom erhöht, indem die Schalteinrichtung 170 geschlossen wird, sodass ein zusätzlicher Strom durch den weiteren Verbraucher 165 fließt. In einer anderen Ausführungsform kann der Strom auch umgekehrt erhöht werden, wenn der zu übertragende Bitwert 0 ist.

FIG 2 zeigt eine weitere Ausführungsform des Energieversorgungssystems 100 von FIG 1. Im Unterschied zu der mit Bezug auf FIG 1 erläuterten Ausführungsform ist hier das Gerät 110 dazu eingerichtet, in Abhängigkeit des Werts des zu übertragenden Bits die Stromaufnahme des Geräts 110 entweder auf einen ersten oder auf einen zweiten Wert anzuheben, die unterschiedlich groß sind und beide über der Stromaufnahme des elektrischen Verbrauchers 155 liegen. In der exemplarisch dargestellten Ausführungsform ist zu diesem Zweck eine Einrichtung 185 zur Bestimmung eines Stroms analog der Einrichtung 130 seitens der Versorgungseinrichtung 105 vorgesehen. Ein weiterer Differenzverstärker 190 ist dazu eingerichtet, den Wert des zu übertragenden Bits positiv und den zu übertragenden Strom negativ zu werten. Eine umgekehrte Wertung ist ebenfalls möglich. Das Ergebnis dieser Subtraktion wird zur Ansteuerung der Stromsteuerung 160 verwendet.

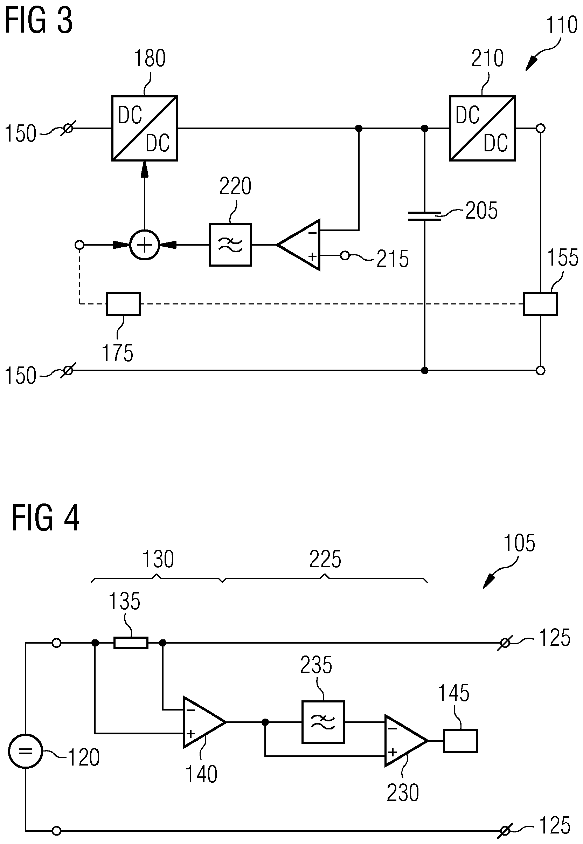

FIG 3 zeigt ein elektrisches Gerät 110 für das Energieversorgungssystem 100 der Figuren 1 oder 2 in einer weiteren Ausführungsform. In der hier dargestellten Variante wird der durch das Gerät 110 aufgenommene Strom in Abhängigkeit des Werts eines gerade zu übertragenden Bits gegenüber der Stromaufnahme des Verbrauchers 155 positiv oder negativ verändert. Wird die Stromaufnahme positiv verändert, so dient der zusätzlich aufgenommene Strom der Aufladung eines Energiespeichers 205, der beispielsweise durch einen Kondensator gebildet sein kann. Wird die Stromaufnahme des Geräts 110 hingegen negativ beeinflusst, so wird die Differenz zwischen der aus der Leitung entnommenen und der vom Verbraucher benötigten elektrischen Energie aus dem Energiespeicher 205 entnommen und dem Verbraucher 155 bereitgestellt.

In der dargestellten Ausführungsform ist der Stromrichter 180 dazu eingerichtet, eine Gleichspannung bereitzustellen, die an dem Energiespeicher 205 anliegt. Der Verbraucher 155 kann unmittelbar aus dem Energiespeicher 205 betrieben werden oder durch einen weiteren Stromrichter 210 vom Energiespeicher 205 entkoppelt sein. Beide Stromrichter 210 können vom DC-DC-Typ sein, also eine Gleichspannung in eine andere Gleichspannung umwandeln. In Abhängigkeit der Beträge der Eingangs- und Ausgangsspannungen kann jeweils ein Step-up- oder Step-down-Konverter verwendet werden.

Bevorzugterweise erfolgt die Steuerung des Stromrichters 180 sowohl auf der Basis des zu übermittelnden Bits des Encoders 175 als auch auf der Basis eines Füllgrads des Energiespeichers 205. In der vorliegenden, bevorzugten Ausführungsform wird die Spannung am Energiespeicher 205, die ein Maß für seinen Füllgrad darstellt, abgetastet und mit einer Referenzspannung 215 verglichen. Das Ergebnis wird mit dem Wert des zu übermittelnden Bits des Encoders 175 zusammengezählt und dient der Steuerung des Stromrichters 180. In einer bevorzugten Ausführungsform ist zusätzlich ein Tiefpassfilter 220 vorgesehen, um das Ergebnis des Vergleichs zwischen der Spannung des Energiespeichers 205 und der Referenzspannung 215 von hochfrequenten Störsignalen zu befreien.

FIG 4 zeigt eine Versorgungseinrichtung 105 für das Energieversorgungssystem 100 der Figuren 1 oder 2 in einer weiteren Ausführungsform. Die dargestellte Versorgungseinrichtung 105 ist insbesondere zum Betrieb in Kombination mit dem Gerät 110 nach der Ausführungsform von FIG 3 eingerichtet. Die übrigen gezeigten Ausführungsformen des Geräts 110 können jedoch ebenfalls an der gezeigten Versorgungseinrichtung 105 betrieben werden.

In der dargestellten Ausführungsform ist zwischen die Einrichtung 130 zur Bestimmung des Stroms durch die Anschlüsse 125 und des Decoders 145 ein Hochpass 225 geschaltet. Der Hochpass 225 ist durch einen Summierer 230 und einen Tiefpass 235 gebildet, der in den invertierenden Eingang des Summierers 230 eingeschleift ist. Der nicht invertierende Eingang des Summierers 230 ist mit dem Eingang des Tiefpasses 235 und dem Ausgang der Einrichtung 130 zur Bestimmung des Stroms verbunden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrisches Gerät (110), umfassend:
- einen Anschluss (150) für eine elektrische Versorgungsleitung (115) zu einer Versorgungseinrichtung (105);
- einen elektrischen Verbraucher (155) zum Betrieb mittels Strom aus der elektrischen Versorgungsleitung (115);
- einen Encoder (175) zur Bereitstellung einer Bitsequenz auf der Basis von Daten, die vom elektrischen Gerät (110) an die Versorgungseinrichtung (105) übermittelt werden sollen, und
- eine Stromsteuerung (160) zur Beeinflussung eines über die elektrische Versorgungsleitung (115) aufgenommenen elektrischen Stroms auf der Basis der Bitsequenz,
**dadurch gekennzeichnet, dass**
- die Stromsteuerung (160) dazu eingerichtet ist, den durch das elektrische Gerät (110) aufgenommenen Strom in Abhängigkeit des Werts eines Bits der Sequenz alternativ auf einen ersten oder einen zweiten Wert zu ändern, wobei der eine Wert oberhalb eines üblicherweise vom Verbraucher (155) aufgenommen Stroms liegt und der andere darunter.

2. Gerät (110) nach Anspruch 1, ferner umfassend eine elektrische Speichereinrichtung (205) zur Aufnahme der durch das elektrische Gerät (110) aufgenommenen Energie und einen Stromrichter zur Versorgung des elektrischen Verbrauchers (155) aus der Speichereinrichtung (205).

3. Gerät (110) nach Anspruch 2, wobei die Stromsteuerung (160) dazu eingerichtet ist, die Stromaufnahme des elektrischen Geräts (110) zusätzlich in Abhängigkeit eines Füllgrads der elektrischen Speichereinrichtung (205) zu beeinflussen.

4. Gerät (110) nach einem der vorangehenden Ansprüche, wobei der Encoder (175) dazu eingerichtet ist, eine Bitsequenz auf der Basis von Betriebsdaten des elektrischen Verbrauchers (155) bereitzustellen.

5. Gerät (110) nach einem der vorangehenden Ansprüche, wobei eine Übertragungsrate der Bitsequenz höher als eine übliche Änderungsfrequenz der Stromaufnahme des Verbrauchers (155) ist.

6. Verfahren zum Übermitteln von Daten von einem elektrischen Gerät (110), das mit einer elektrischen Versorgungseinrichtung (105) verbunden ist, zu der Versorgungseinrichtung (105), wobei das Verfahren folgende Schritte umfasst:
- Bereitstellen einer Bitsequenz auf der Basis der zu übermittelnden Daten;
- Beeinflussen, durch das Gerät (110), eines durch das elektrische Gerät (110) aufgenommenen Stroms auf der Basis der Bitsequenz;
- wobei der aufgenommene Strom in Abhängigkeit des Werts eines Bits der Sequenz alternativ auf einen ersten oder einen zweiten Wert geändert wird, wobei der eine Wert oberhalb eines üblicherweise vom Verbraucher (155) aufgenommen Stroms liegt und der andere darunter;
- Bestimmen, durch die Versorgungseinrichtung (105), eines durch das elektrische Gerät (110) aufgenommenen Stroms und
- Bereitstellen der Daten auf der Basis einer Sequenz bestimmter elektrischer Stromaufnahmen.

## Claims

1. Electrical device (110), comprising
- a terminal (150) for an electrical supply line (115) to a supply apparatus (105);
- an electrical load (155) for operation by means of current from the electrical supply line (115);
- an encoder (175) for providing a bit sequence on the basis of data to be transmitted from the electrical device (110) to the supply apparatus (105), and
- a current controller (160) for influencing, on the basis of the bit sequence, an electrical current consumed via the electrical supply line (115),
**characterised in that**
- the current controller (160) is configured to change the current consumed by the electrical device (110) as a function of the value of one bit in the sequence alternatively to a first or a second value, wherein one value lies above a current normally consumed by the load (155) and the other one lies below it.

2. Device (110) according to claim 1, further comprising an electrical storage apparatus (205) for consuming the energy consumed by the electrical device (110) and a power converter for supplying the electrical load (155) from the storage apparatus (205).

3. Device (110) according to claim 2, wherein the current controller (160) is configured to influence the power consumption of the electrical device (110) additionally as a function of a fill level of the electrical storage apparatus (205).

4. Device (110) according to one of the preceding claims, wherein the encoder (175) is configured to provide a bit sequence on the basis of operating data of the electrical load (155).

5. Device (110) according to one of the preceding claims, wherein a transmission rate of the bit sequence is higher than a usual frequency of changes of the power consumption of the load (155).

6. Method for transmitting data from an electrical device (110), which is connected to an electrical supply apparatus (105), to the supply apparatus (105), wherein the method comprises the following steps:
- provision of a bit sequence on the basis of the data to be transmitted;
- influencing, by the device (110), of a current consumed by the electrical device (110) on the basis of the bit sequence;
- wherein the current consumed is changed as a function of the value of one bit in the sequence alternatively to a first or a second value, wherein one value lies above a current normally consumed by the load (155) and the other one lies below it;
- determination, by the supply apparatus (105), of a current consumed by the electrical device (110) and
- provision of the data on the basis of a sequence of particular electrical current consumptions.

## Revendications

1. Appareil (110) électrique, comprenant :
- une borne (150) pour une ligne (115) d'alimentation électrique allant à un dispositif (105) d'alimentation ;
- un consommateur (155) électrique pour le fonctionnement au moyen du courant provenant de la ligne (115) d'alimentation électrique ;
- un encodeur (175) pour mettre à disposition une séquence de bit sur la base de données qui sont transmises par l'appareil (110) électrique au dispositif (105) d'alimentation et
- une commande (160) de courant pour influer sur un courant électrique absorbé par la ligne (115) d'alimentation électrique sur la base de la séquence de bit,
**caractérisé en ce que**
- la commande (160) de courant est conçue pour faire passer le courant absorbé par l'appareil (110) électrique, en fonction de la valeur d'un bit de la séquence en alternance, à une première ou à une deuxième valeur, l'une des valeurs étant au-dessus d'un courant absorbé habituellement par le consommateur (155) et l'autre en dessous.

2. Appareil (110) suivant la revendication 1, comprenant en outre un dispositif (205) d'accumulation électrique pour absorber l'énergie absorbée par l'appareil (110) électrique et un convertisseur pour alimenter le consommateur (155) électrique à partir du dispositif (205) d'accumulation.

3. Appareil (110) suivant la revendication 2, dans lequel la commande (160) de courant est conçue pour influencer l'absorption de courant par l'appareil (110) électrique supplémentairement en fonction d'un niveau du dispositif (205) d'accumulation électrique.

4. Appareil (110) suivant l'une des revendications précédentes, dans lequel l'encodeur (175) est conçu pour mettre à disposition une séquence de bit sur la base de données de fonctionnement du consommateur (155) électrique.

5. Appareil (110) suivant l'une des revendications précédentes, dans lequel une vitesse de transmission de la séquence de bit est plus grande qu'une fréquence de variation habituelle de l'absorption du courant par le consommateur (155).

6. Procédé de transmission de données d'un appareil (110) électrique, qui est relié à un dispositif (105) d'alimentation électrique, au dispositif (105) d'alimentation, le procédé comprenant les stades suivants :
- on met à disposition une séquence de bit sur la base des données à transmettre ;
- on influe, par l'appareil (110), sur un courant absorbé par l'appareil (110) électrique, sur la base de la séquence de bit ;
- on fait passer le courant absorbé en fonction de la valeur d'un bit de la séquence en alternance à une première ou à une deuxième valeur, l'une des valeurs étant au-dessus du courant absorbé habituellement par le consommateur (155) et l'autre en dessous ;
- on détermine, par le dispositif (105) d'alimentation, un courant absorbé par l'appareil (110) électrique et
- on met à disposition les données sur la base d'une séquence d'absorptions de courant électrique déterminées.
